# EUROPÄISCHE PATENTSCHRIFT

(11) **EP 0 789 611 B1**
(45) Veröffentlichungstag und Bekanntmachung des Hinweises auf die Patenterteilung: **30.09.1998**
(21) Anmeldenummer: 95938381.1
(22) Anmeldetag: 31.10.1995
(51) Int. Cl.: B01D 29/90

(54) **KERZENFILTERVORRICHTUNG FÜR DIE BIERFILTRATION**
MULTIPLE TUBE FILTER DEVICE FOR FILTERING BEER
DISPOSITIF A FILTRES EN FORME DE BOUGIE UTILISE POUR LA FILTRATION DE BIERE

(30) Priorität: 03.11.1994 DE 9417638 U
(43) Veröffentlichungstag der Anmeldung: 20.08.1997
(73) Patentinhaber: Anton Steinecker Maschinenfabrik GmbH, 85356 Freising-Attaching (DE)
(72) Erfinder: REDL, Simon, D-85293 Reichertshausen (DE)
(74) Vertreter: Grünecker, Kinkeldey, Stockmair & Schwanhäusser Anwaltssozietät
(86) Internationale Anmeldenummer: EP9504276
(87) Internationale Veröffentlichungsnummer: WO9614129

(56) Entgegenhaltungen:
- EP-A- 0 354 317
- DE-A- 1 177 563
- DE-U- 9 411 930
- US-A- 3 666 097

## Beschreibung

Die Erfindung betrifft eine Kerzenfiltervorrichtung für die Bierfiltration, mit einem Filterbehälter, an dessen unteren und oberen Ende jeweils zumindest eine Öffnung vorgesehen ist, und mit einem sich im wesentlichen von unten nach oben verjüngenden Einsatzkörper, der im unteren Bereich eines Auslaufteiles des Filterbehälters über der unteren Öffnung angeordnet ist.

Herkömmliche Kerzenfiltervorrichtungen weisen einen im wesentlichen zylindrischen oberen Filterkerzenaufnahmeraum auf, in dem eine Vielzahl von zueinander beabstandete, vertikal angeordnete, stabförmige Filterkerzen enthalten sind. Nach unten hin wird der Kerzenaufnahmeraum durch ein sich verjüngendes Auslaufteil fortgesetzt. Über mehrere Zu- und Ableitungen, die vor allem im unteren und im oberen Bereich des Filterbehälters vorgesehen sind, werden je nach Verfahrensstadium verschiedene Durchflußmedien zu- und abgeführt.

Das zu filtrierende Bier und das Filterhilfsmittel, das z.B. Kieselgur sein kann, strömen üblicherweise während des gesamten Filterprozesses durch die untere Öffnung des Filterbehälters ein. Um über die gesamte Filterzeit eine gleichmäßig hohe Filterqualität und eine möglichst gleichmäßige Verteilung und möglichst gleichmäßige Anschwemmen des Filterhilfsmittels zu erzielen, ist ein über den gesamten Querschnitt des Filterbehälters entsprechend gleichmäßiges Einströmen von Bier und Filterhilfsmittel erforderlich. Eine Kerzenfiltervorrichtung mit einem Einsatzkörper ist im Gebrauchsmuster G9411930.9 beschrieben.

Der Erfindung liegt daher die Aufgabe zugrunde, eine Kerzenfiltervorrichtung der eingangs genannten Art bereitzustellen, bei der die Gleichmäßigkeit des Einströmens von Unfiltrat und Filterhilfsmittel und die Gleichmäßigkeit der Kuchendicke an den Kerzen verbessert wird.

Diese Aufgabe wird erfindungsgemäß durch die kennzeichnenden Merkmale des Anspruches 1 gelöst. Durch das Hindurchleiten von Bier und Filterhilfsmittel durch ein Verteilersteigrohr, Verteileröffnungen und durch eine Umlenkvorrichtung, an der das Filtermedium mehrmals in seiner Strömungsrichtung umgelenkt wird, ist ein sehr gleichmäßiges Einströmverhalten des zu filternden Mediums zu erreichen. Somit steigt das Filtermedium in einer laminaren Strömung im Filterbehälter auf und bildet z.B. eine scharfe Grenzfläche bei der Verdrängung des zuvor im Filterbehälter enthaltenen Wassers, so daß nur mit einem geringen "Bierverschnitt" zu rechnen ist.

In vorteilhafter Ausgestaltung der Erfindung sind die Umlenkwände ringförmig ausgebildet, so daß das Unfiltrat und das Filterhilfsmittel in einer im wesentlichen S-förmigen Strömungslinie an den Umlenkwänden vorbei zur Austrittsöffnung gelangt.

In weiterer vorteilhafter Ausgestaltung der Erfindung dient das Verteilersteigrohr als Halteeinrichtung für den Einsatzkörper und ist dabei derart angeordnet, daß sich die Mittelachse des Verteilersteigrohres mit der Mittelachse des Filterbehälters deckt. Einerseits sind somit keine weiteren, die Gleichmäßigkeit des einströmenden zu filternden Mediums behindernden Haltevorrichtungen erforderlich, und andererseits unterstützt die zentriert, vertikale Anordnung des Verteilersteigrohres und somit auch des Einsatzkörpers ein gleichmäßiges Einströmen des zu filternden Mediums in das Filterbehälterinnere.

Die Merkmale der Ansprüche 4 und 5 dienen ferner zur Erfüllung der erfindungsgemäßen Anforderungen.

Mit einer weiteren Durchlaßverbindung zwischen dem Verteilersteigrohr und dem Äußeren des Einsatzkörpers über Halbbohrungen und Durchtrittsöffnungen ist eine zusätzlich vergleichmäßigende Ausströmungskomponente aus dem Einsatzkörper ins Innere des Filterbehälters gegeben. Ferner ist auf einfache Weise für eine Entlüftung des Systems Verteilersteigrohr - Einsatzkörper gesorgt, so daß sich vor allem in der Anlaufphase keine Lufteinschlüsse im oberen Bereich, z.B. des Verteilersteigrohres oberhalb der Verteilerbohrungen, bilden können. Schließlich ist das Austragen des Filterkuchens dadurch wirksam erleichtert, daß durch die Durchtrittsöffnungen geleitete Druckluft zur Auflockerung des verdichteten Filterkuchens verwendet wird.

Die Erfindung wird nachstehend anhand eines Ausführungsbeispiels und zugehöriger Zeichnungen näher erläutert. In diesen zeigen:
- Fig. 1: schematisch einen Längsschnitt eines unteren Unfiltrateinlaßbereiches eines Kerzenfilters nach der Erfindung,
- Fig. 2: schematisch einen Horizontalschnitt eines Einsatzkörpers entlang der Linie A-A in Fig. 1.

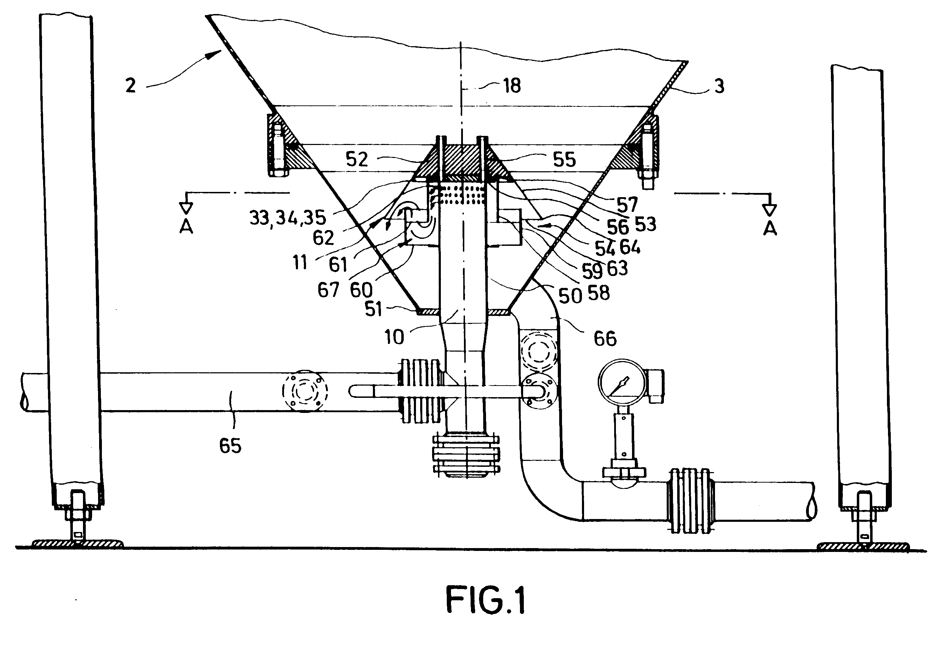

Die Fig. 1 zeigt ein Ausführungsbeispiel einer bekannten Kerzenfiltervorrichtung von dem im wesentlichen nur der untere Bereich, an den sich ein nach unten konisch verjüngendes Auslaufteil 3 ausbildet, und in dem ein Einsatzkörper 11 vorgesehen ist. Der Filterbehälter 2 wird nach oben hin (in der Fig. 1 nicht dargestellt) mit einem bekannten im wesentlichen zylindrischen Filterkerzenaufnahmeraum fortgesetzt. Der Einsatzkörper 11 ist z.B. im unteren Drittel des Auslaufteiles 3 innerhalb eines Behälterinnenraumes in einer Höhe aufgenommen, so daß der Einsatzkörper 11 im unteren Teil des Filterbehälters 2 verbleibt, wenn beispielsweise der Filterbehälter 2 zum Zweck des Filterkerzenwechsels geöffnet werden muß.

Ein Verteilersteigrohr 50 ragt vertikal von unten in das Auslaufteil 3 ins Filterbehälterinnere hinein. Dabei ist das Verteilersteigrohr 50 durch die untere Öffnung 10 des Filterbehälters 2 geführt, die durch eine vorzugsweise schräggestellte Abschlußplatte 51 am unteren Auslauf bzw. der unteren Öffnung 10 des Konusstumpfes des Auslaufteiles 3 angeordnet ist. Die Mittelachse des Verteilersteigrohres 50 stimmt mit der Mittelachse 18 des Filterbehälters 2 im wesentlichen überein. Am oberen Endbereich des Verteilersteigrohres 50 ist der Einsatzkörper 11 befestigt. Das Verteilersteigrohr 50 ragt somit in das Innere des Einsatzkörpers 11 zentrisch von unten hinein.

In einem oberen Abschnitt weist der Einsatzkörper 11 eine im wesentlichen als Vollkörper ausgebildete kegelstumpfförmige Kappe 52 auf. Die von der Kappe 52 vorgegebene Kegelform wird nach unten (in Fig. 1) im gleichen Winkel als Schirmwandung 53 fortgesetzt. Somit ist nahezu die untere Hälfte des Einsatzkörpers 11 mit dem Hohlraum versehen, in dem eine Umlenkvorrichtung 54 eingesetzt ist. Eine Haltescheibe 56 ist am oberen Endbereich des Verteilersteigrohres 10 mit diesem verschweißt. Mehrere vertikal von oben (in Fig. 1) in die Kappe 52 einzuschraubende Schrauben 55, z.B. Sechskantschrauben, pressen die Kappe 52 gegen die Haltescheibe 56, so daß ein horizontaler Halteringabschnitt 57 der Umlenkvorrichtung 54 zwischen der Kappe 52 und der Haltescheibe 56 zentriert wird.

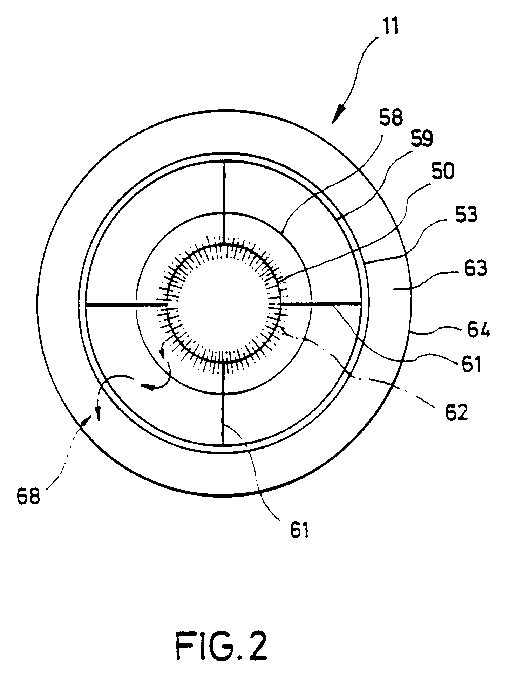

Wie aus Fig. 1 und Fig. 2 hervorgeht, weist die Umlenkvorrichtung 54 eine erste, kleinere ringförmige Umlenkwand 58 und eine zweite im Durchmesser größere ringförmige Umlenkwand 59 auf. Am oberen Endbereich der ersten Umlenkwand 58 ist nach innen der Haltering 57 ausgebildet. Die erste Umlenkwand 58 erstreckt sich etwa über die gesamte Höhe des durch den Schirm 53 gebildeten Hohlraumes des Einsatzkörpers 11. Eine zweite Umlenkwand 59, die ebenso wie die erste Umlenkwand 58 vertikal, also parallel zur Wandung des Verteilersteigrohres 50 verläuft, ist etwa in dreifachem Abstand des Abstandes zwischen erster Umlenkwand 58 und Verteilersteigrohr 50 vom Verteilersteigrohr 50 entfernt. Die zweite Umlenkwand 59 ragt nur zu etwa einem Drittel ihrer vertikalen Erstreckung in den Hohlraum des Einsatzkörpers 11 hinein und zum restlichen Teil nach unten (in Fig. 1) aus dem Einsatzkörper 11 hinaus. Die zweite Umlenkwand 59 ist an ihrem unteren Ende durch eine horizontale Ringbodenscheibe 60 mit der Wandung des Verteilersteigrohres 50 verbunden, so daß ein ringförmiger, wannenartiger Hohlraum gebildet wird. Ferner sind mehrere radial verlaufende Stabilisierungsstreben 61 vorgesehen, die die Außenwandung des Verteilersteigrohres mit dem unteren Ende der ersten Umlenkwand 58 und der Innenwandung der zweiten Umlenkwand 59 verbindet. Wie in Fig. 2 dargestellt, können beispielsweise vier Stabilisierungsstreben 61 verwendet werden.

Weiterhin sind über den Umfang gleichmäßig verteilt, am oberen Ende des Verteilersteigrohres 50, also innerhalb des Hohlraumes des Einsatzkörpers 11, mehrere gebohrte Verteileröffnungen 62 vorgesehen. Diese Verteilung der Verteileröffnungen 62 über den Umfang der Wandung des Verteilersteigrohres 50 ist in Fig. 2 durch kurze strichpunktierte Linien angedeutet. Wie in Fig. 1 gezeigt, können beispielsweise drei Reihen von Verteilerbohrungen 62 übereinander am Verteilersteigrohr 50 angeordnet sein.

Zwischen einer unteren Abschlußkante 64 der Schirmwandung 53 und der zweiten Umlenkwand 59 ist an der Unterseite der beschriebenen Ausführungsform des Einsatzkörpers 11 ein ringförmiger Spalt bereitgestellt, der als Austrittsöffnung 63 für das gleichmäßig anströmende Unfiltrat und Filterhilfsmittel dient. Die radiale Öffnungsbreite der Ausgangsöffnung 63 umfaßt etwa ein Drittel vom Gesamtabstand der Abschlußkante 64 des Schirmes 53 von der Wandung des Verteilersteigrohres 50.

Des weiteren sind im Einsatzkörper 11 radial über den Umfang verteilt, Durchtrittsöffnungen 33, 34, 35 am Übergangsbereich zwischen der Kappe 52 und der Schirmwandung 53 vorgesehen. Die Durchtrittsöffnungen, 33, 34, 35 sind im wesentlichen auf einer Höhe an der Außenseite als Durchtrittsbohrung zum Hohlraum des Einsatzkörpers 11 ausgeführt, so daß auch über diese Öffnungen 33, 34, 35 Flüssigkeiten oder Gase austreten können. Jede dritte Bohrung ist als Durchtrittsöffnung 33 vorgesehen, die mit der Horizontalen typischerweise einen Winkel von 35° einschließt. Die beiden jeweils dazwischenliegenden Durchtrittsöffnungen 34 und 35 sind weiter schräg nach oben gerichtet und schließen einen Winkel mit der Horizontalen von etwa 50 bzw. 55° ein. In der vorliegenden Ausführungsform weisen die Durchtrittsöffnungen 33, 34 und 35 jeweils einen Durchmesser von etwa 2,5 mm auf.

Bei dieser Ausführungsform sind im Inneren des Einsatzkörpers 11 die Durchtrittsöffnungen 33, 34, 35 als Hohlraum direkt unterhalb der Kappe 52 angeordnet. Im oberen Bereich zwischen der Umlenkwand 58 und der Außenwandung des Verteilersteigrohres und innerhalb des Verteilersteigrohres sind z.B. Halbbohrungen (in den Figuren nicht gezeigt) vorgesehen, die sich zur Kappe 52 erstrecken und eine Durchlaßverbindung zu den Durchtrittsöffnungen 33, 34, 35 schaffen.

Die Funktionsweise dieser Ausführungsform des Einsatzkörpers 11 in einer Kerzenfiltervorrichtung wird nachfolgend beschrieben.

Das zu filtrierende Bier und das Filterhilfsmittel wird über die Zuführleitung 65 durch die untere Öffnung 10 durch das Verteilersteigrohr 50 in den Filterbehälter 2 eingelassen. Dieses zu filternde Medium strömt aus den Verteileröffnungen 62 vom Verteilersteigrohr 50 in die Umlenkvorrichtung 54 ein. Ähnlich einer S-förmigen Strömungslinie fließt das zu filternde Medium an der ersten und der zweiten Umlenkwand 58, 59 vorbei, und verläßt den Einsatzkörper 11 an seiner Unterseite durch die ringförmige Austrittsöffnung 63. Das zu filternde Medium folgt dabei der in Fig. 1 bzw. Fig. 2 mit den Pfeilen 67 bzw. 68 angedeuteten Strömungslinien und hat mittlerweile über den gesamten Umfang des Einsatzkörpers eine annähernd gleiche Strömungsgeschwindigkeit erreicht, so daß das zu filternde Medium durch den erneut ringförmigen Spalt, der durch die Außenseite des Einsatzkörpers 11 und die Innenwandung des Auslaufteiles 3 gebildet ist, äußerst gleichmäßig nach oben zum in der Fig. nicht dargestellten Filterkerzenaufnahmeraum aufströmt. Zusätzlich verläßt ein Teil des Filtermediums den Einsatzkörper 11 durch die Durchtrittsöffnungen 33, 34, 35 und trägt weiterhin zur Vergleichmäßigung der im Auslaufteil hochströmenden Flüssigkeit bei. Diese Komponente des Filtermediums ist jedoch weitaus geringer als die Komponente, die den Einsatzkörper, wie zuvor beschrieben, über die ringförmige Austrittsöffnung 63 verläßt.

Beim Austragen des Filterkuchens in den Auslauf 66 dient die Konusform des Einsatzkörpers 11 einer Vergleichmäßigung des Ablaufes und weiterhin lassen sich dennoch verdichtete Filterhilfsmittelbereiche, durch das Einlassen von Druckluft über das Verteilersteigrohr 50 und durch die Durchtrittsöffnungen 33, 34 und 35 auflockern und vergleichmäßigen.

Gleichermaßen ist zu Reinigungszwecken eine Reinigungsflüssigkeit wie beispielsweise Wasser durch die Durchtrittsöffnungen 33, 34 und 35 durchleitbar, so daß insbesondere die Innenwände des Auslaufteiles 3 an denen das besonders verdichtete Filterhilfsmittel angedrückt wurde, wirksam zu reinigen sind.

## Patentansprüche

1. Kerzenfiltervorrichtung für die Bierfiltration, mit einem Filterbehälter, an dessen unteren und oberen Ende jeweils zumindest eine Öffnung vorgesehen ist, und mit einem sich im wesentlichen von unten nach oben verjüngenden Einsatzkörper, der im unteren Bereich eines Auslaufteiles des Filterbehälters über der unteren Öffnung angeordnet ist, **dadurch gekennzeichnet**, daß im Inneren des Einsatzkörpers (11) ein Verteilersteigrohr (50) für das zu filternde Medium zumindest eine Verteileröffnung (62) aufweist, und daß weiterhin im Inneren des Einsatzkörpers (11) eine Umlenkvorrichtung (54) vorgesehen ist, an der das zu filternde Medium seine Strömungsrichtung mehrmals ändert.

2. Kerzenfiltervorrichtung nach Anspruch 1, **dadurch gekennzeichnet**, daß das zu filternde Medium in die Umlenkvorrichtung (54) einströmt und an vertikalen, ringförmigen Umlenkwänden (58,59) vorbei in einer im wesentlichen S-förmigen Strömungslinie (67) zu einer Austrittsöffnung (63) des Einsatzkorpers (11) gelangt.

3. Kerzenfiltervorrichtung nach Anspruch 1 oder 2, **dadurch gekennzeichnet**, daß das Verteilersteigrohr (50) zwischen der unteren Öffnung (10) des Filterbehälters (2) und dem Einsatzkörper (11) vertikal und zentrisch um eine Mittelachse (18) des Filterbehälters (2) angeordnet und der Einsatzkörper (11) durch das Verteilersteigrohr (50) in Position gehalten ist.

4. Kerzenfiltervorrichtung nach mindestens einem der vorangegangenen Ansprüche, **dadurch gekennzeichnet**, daß am oberen Ende des Verteilersteigrohres (50) über den Umfang verteilt eine Vielzahl von Verteileröffnungen (62) im inneren des Einsatzkörpers (11) münden.

5. Kerzenfiltervorrichtung nach mindestens einem der vorangegangenen Ansprüche, **dadurch gekennzeichnet**, daß die Austrittsöffnung (63) für das zu filternde Medium im wesentlichen an der Unterseite des Einsatzkörpers (11) angeordnet und als ringförmige Öffnung ausgebildet ist.

6. Kerzenfiltervorrichtung nach mindestens einem der vorangegangenen Ansprüche, **dadurch gekennzeichnet**, daß im Einsatzkörper (11) weiterhin Durchtrittsöffnungen (33,34,35) vorgesehen sind, so daß weitere Durchlaßverbindungen zwischen dem Verteilersteigrohr (50) und dem Äußeren des Einsatzkörpers (11) ausgebildet sind.

7. Kerzenfiltervorrichtung nach mindestens einem der vorangegangenen Ansprüche, **dadurch gekennzeichnet**, daß im oberen Bereich der Umlenkwand (58) außerhalb und/oder innerhalb des Verteilersteigrohres (50) Halbbohrungen zur Kappe (52) vorgesehen sind, die die Durchlaßverbindung zu den Durchtrittsöffnungen (33,34,35) herstellen.

## Claims

1. Tube filter for filtration of beer, with a filter cartridge at whose lower and upper ends at least one opening each is provided, and with an installed element tapering essentially from bottom to top and which is located in the lower region of the outlet part of the filter cartridge above the lower opening, characterized in that in the interior of the installed element (11) there is an ascending distribution tube (50) for the filter medium having at least one distribution opening (62), and that furthermore, in the interior of the installed element (11) there is a bypass device (54) that changes the direction of flow of the filter medium several times.

2. Tube filter according to Claim 1, characterized in that the medium to be filtered flows into the bypass device (54) and moves past vertical, ring-like diverter walls (58,59) m an essentially S-shaped flow line (67) to an outlet opening (63) of the installed element (11).

3. Tube filter according to Claim 1 or 2, characterized in that the ascending distribution tube (50) is located between the lower opening (10) of the filter cartridge (2) and the installed element (11) vertically and centrally about a middle axis (18) of the filter cartridge (2) and the installed element (11) is held in position by the ascending distribution tube (50).

4. Tube filter according to at least one of the preceding claims, characterized in that at the upper end of the ascending distribution tube (50) a number of distribution openings (62) are distributed across the perimeter and open into the interior of the installed element (11).

5. Tube filter according to at least one of the preceding claims, characterized in that the outlet opening (63) for the medium to be filtered is located essentially at the underside of the installed element (11) and is designed as a ring-like opening.

6. Tube filter according to at least one of the preceding claims, characterized in that in the installed element (11) additional transit openings (33,34,35) are provided, so that additional transit connections are formed between the ascending distribution tube (50) and the exterior of the installed element (11).

7. Tube filter according to at least one of the preceding claims, characterized in that at the upper region of the bypass wall (58) outside and/or inside of the ascending distribution tube (50), half-holes are provided towards a cap (52) that establish the transit connection to the transit openings (33,34,35).

## Revendications

1. Dispositif de filtration en forme de bougie pour la filtration de la bière, comprenant un récipient pour le filtre aux extrémités inférieure et supérieure duquel on prévoit respectivement au moins une ouverture et comprenant une pièce rapportée se rétrécissant essentiellement de bas en haut, qui est disposée dans la zone inférieure d'une partie d'évacuation du récipient pour le filtre au-dessus de son ouverture inférieure, caractérisé en ce qu'à l'intérieur de la pièce rapportée (11), une colonne montante de distribution (50) pour le milieu à filtrer présente au moins une ouverture de distribution (62), et en ce qu'on prévoit en outre, à l'intérieur de la pièce rapportée (11), un dispositif de déviation (54) sur lequel la direction d'écoulement du milieu à filtrer subit une modification à plusieurs reprises.

2. Dispositif de filtration en forme de bougie selon la revendication 1, caractérisé en ce que le milieu à filtrer pénètre dans le dispositif de déviation (54) et aboutit, en passant devant des parois de déviation verticales (58, 59) de forme annulaire, en suivant une ligne d'écoulement (67) essentiellement en forme de S, à une ouverture d'évacuation (63) de la pièce rapportée (11).

3. Dispositif de filtration en forme de bougie selon la revendication 1 ou 2, caractérisé en ce que la colonne montante de distribution (50) est disposée entre l'ouverture inférieure (10) du récipient (2) pour le filtre et la pièce rapportée (11) en position verticale et en position centrale autour d'un axe médian (18) du récipient (2) pour le filtre, la pièce rapportée (11) étant maintenue en position par la colonne montante de distribution (50).

4. Dispositif de filtration en forme de bougie selon au moins une des revendications précédentes, caractérisé en ce qu'une multitude d'ouvertures de distribution (62) réparties sur la périphérie de l'extrémité supérieure de la colonne montante de distribution (50) débouchent à l'intérieur de la pièce rapportée (11).

5. Dispositif de filtration en forme de bougie selon au moins une des revendications précédentes, caractérisé en ce que l'ouverture d'évacuation (63) pour le milieu à filtrer est disposée essentiellement sur le côté inférieur de la pièce rapportée (11) et est réalisée sous forme d'une ouverture annulaire.

6. Dispositif de filtration en forme de bougie selon au moins une des revendications précédentes, caractérisé en ce qu'on prévoit en outre dans la pièce rapportée (11), des ouvertures de passage (33, 34, 35), si bien que l'on obtient des liaisons de transmission supplémentaires entre la colonne montante de distribution (50) et l'extérieur de la pièce rapportée (11).

7. Dispositif de filtration en forme de bougie selon au moins une des revendications précédentes, caractérisé en ce qu'on prévoit, dans la zone supérieure de la paroi de déviation (58), à l'extérieur et/ou à l'intérieur de la colonne montante de distribution (50), des demi-alésages en direction du couvercle (52), qui forment la liaison de transmission avec les ouvertures de passage (33, 34, 35).
